# EUROPEAN PATENT SPECIFICATION

(11) **EP 3 943 930 B1**
(45) Date of publication and mention of the grant of the patent: **11.10.2023**
(21) Application number: 19922051.8
(22) Date of filing: 22.03.2019
(51) Int. Cl.: G01N 30/60, G01N 1/34, G01N 1/40, B01D 15/12, B01J 20/04, B01J 20/28, G01N 1/28

(54) **KIT FOR EXTRACTING DRUG RESIDUES FROM LIVESTOCK, POULTRY AND AQUATIC PRODUCTS, AND METHOD FOR OBTAINING PRIMARY TEST LIQUID**
KIT ZUM EXTRAHIEREN VON ARZNEIMITTELRÜCKSTÄNDEN AUS VIEH, GEFLÜGEL UND WASSERPRODUKTEN UND VERFAHREN ZUR GEWINNUNG VON PRIMÄRER TESTFLÜSSIGKEIT
TROUSSE D'EXTRACTION DE RÉSIDUS DE MÉDICAMENTS PROVENANT DE BÉTAIL, DE VOLAILLE ET DE PRODUITS AQUATIQUES, ET PROCÉDÉ D'OBTENTION DE LIQUIDE DE TEST PRIMAIRE

(43) Date of publication of application: 26.01.2022
(73) Proprietor: Great Engineering Technology Corporation, Kaohsiung, Taiwan 518000 (TW)
(72) Inventor: HUA, Hung Ta, Kaohsiung, Taiwan 518000 (TW); KU, Yi-Jia, Kaohsiung, Taiwan 518000 (TW)
(74) Representative: Lang, Christian
(86) International application number: PCT/CN2019/079283
(87) International publication number: WO 2020/191528

(56) References cited:
- WO-A1-2006/098696
- WO-A1-2018/124862
- CN-A- 103 111 091
- CN-A- 105 259 276
- CN-A- 109 001 325
- CN-U- 202 631 493
- CN-U- 203 732 332
- TW-A- 201 905 434
- US-B2- 9 581 579
- Jin Peihai, Huang Guobin: "Comparison and Analysis of Solid Phase Extraction Columns with Different Fillers Applied for Pyrethroid Pesticides in Pond Water", Legality Vision, no. 01, 31 January 2017 (2017-01-31), pages 143-144, XP009530360, CN ISSN: 2095-4379
- Shui Miao , Ke Wang , Lu Ji-Wei , Yu Jian: "The Innovation of New Mixture Type of SPE Columns for the Determination of Pesticide Residues in Produces", Chinese Journal of Health Laboratory Technology, vol. 21, no. 1, 10 January 2011 (2011-01-10), pages 7-12, XP055846492, ISSN: 1004-8685

## Description

### Technical Field

This application relates to a kit for extracting drug residues from livestock or poultry aquatic products and method of obtaining primary test liquid from livestock or poultry aquatic products using the same.

### Background Technology

A veterinary drug is a substance that deals with the prevention, diagnosis and treatment of disease, disorder and injury in animals. In general, food animals include meat-producing or milk-producing animals, poultry, fish and bees. Animals also get sick like humans and therefore need appropriate treatment. Veterinary drugs can be used to control disease in animals so as to produce food efficiently. In the absence of proper treatment, diseases in animals can affect or reduce production and ultimately reduce the quantity and quality of food. In addition to use as a treatment animal husbandry may also use veterinary drugs to improve feed performance, increase production and promote growth. Veterinary drugs break down into other substances over time when being applied to animals. However, veterinary drugs will also leave as residues in the animals. Residues of veterinary drugs refer to veterinary drug residues left on animals in a certain period of time after application. These residues may be veterinary drugs themselves or decomposed substances. Residues of veterinary drugs in food may have adverse effects on human health.

In order to detect the amount of veterinary drug residues in food, many extraction kits have been developed. Exemplary test kits are disclosed in US9581579B2 and CN109001325.

However, current detection of different types of veterinary drug residues uses different extraction kits and detection method. For example, in order to detect the residual amount of animal drugs such as sulfa drugs, receptors and tetracycline in food, the government has announced different extraction kits and detection methods.

### Summary of Invention

The present application provides a kit for extracting drug residues from livestock or poultry aquatic products and a method of obtaining primary test liquid from livestock or poultry aquatic products using the same that can solve the problem of using different extraction kits and methods of detecting different kinds of veterinary drug residues in food,

More specifically, the kit for extracting drug residues from livestock or poultry aquatic products according to the present application includes a pipe, a first powder mixture layer and a second powder mixture layer. The pipe has an output port at the bottom thereof and an input port at the top thereof for inputting a sample solution. The first powder mixture layer is in the form of powder and filled in the pipe. The first powder mixture layer contains anhydrous sodium sulfate powder and sodium chloride powder. The second powder mixture layer is in the form of powder and filled in the pipe. The second powder mixture layer is located below the first powder mixture layer and above the output port. The second powder mixture layer contains anhydrous sodium sulfate powder and C18 powder.

In one embodiment of the present application, a weight ratio of the anhydrous sodium sulfate to the sodium chloride in the first powder mixture layer is (3~5):1.

In one embodiment of the present application, a weight ratio of the anhydrous sodium sulfate to the C18 in the second powder mixture layer is (1.5∼3):1.

In one embodiment of the present application, the weight ratio of the anhydrous sodium sulfate to the sodium chloride in the first powder mixture layer is 3.5:1.

In one embodiment of the present application, the weight ratio of the anhydrous sodium sulfate to the C18 in the second powder mixture layer is 2:1.

In one embodiment of the present application, the first powder mixture layer has a porosity of 35 to 70% in the pipe.

In one embodiment of the present application, the first powder mixture layer has an area of 0.6 to 7.1 cm² and a height of 1 to 8 cm in the pipe, the second powder mixture layer has an area of 0.6 to 7.1 cm² and a height of 0.23 to 5 cm in the pipe.

Furthermore, the embodiment of the present application provides a method of obtaining a primary test liquid from a livestock or poultry aquatic sample including the steps: homogenizing the livestock or poultry aquatic sample so as to obtain fragments of the livestock or poultry aquatic sample; adding an extraction solvent to the fragments of the livestock or poultry aquatic sample and then shaking to obtain a sample solution, wherein a 2~(5±0.03) grams of the livestock or poultry aquatic sample is added 1 to 10 mL of the extraction solvent; adding the sample solution into the pipe of the kit of any one of claims 1-7; and driving the sample solution in the pipe to flow through the first powder mixture layer and the second powder mixture layer in the pipe in sequence to output from the output port of the pipe a primary test liquid.

In one embodiment of the present application, the extraction solvent is one selected from the group consisting of acid-containing acetonitrile methanol, hydrochloric acid, EDTA-2Na and acid-containing acetonitrile solution.

In one embodiment of the present application, a flow rate of the sample solution is controlled in a range of about 0.01 to 0.2 mL/sec.

In view of the above, the above-mentioned technical solution features of this application may have one or more of the following beneficial effects:
When the kit of the present application is used to obtain primary test liquid from 20 samples, the consumption of the extraction solvent may be saved by 35-90%, and the operation time for extraction may be saved by 80-95%. Furthermore, according to the kit of the present application and the method of obtaining the primary test liquid, 7 to 10 types of animal drug residues in food, including sulfonamides, quinolones, ionic anticoccidial drugs, antiprotozoal agents, tetracyclines, receptors, and cephalosporins may be simultaneously detected. In comparison with the current government announcement method, detection of different types of drug residues needs different detection methods.

The foregoing, as well as additional objects, features and advantages of the invention will be more readily apparent from the following detailed description, which proceeds with reference to the accompanying drawings.

### Description of Drawings

In order to explain the technical solutions of the present application more clearly, the following will briefly introduce the drawings used in the description of the embodiments. Obviously, the drawings in the following description are only some embodiments of the present application. Ordinary technicians can obtain other drawings based on these drawings without creative work.
FIG. 1 is a schematic diagram of an extraction kit according to a preferred embodiment of the present application.
FIG. 2 is another schematic diagram of an extraction kit according to a preferred embodiment of the present application.

### [Reference Signs List]

100: extraction kit; 110: pipe; 112: output port; 120: filter pad; 130: first powder mixture layer; 140: second powder mixture layer; 200: piston rod; 300: tube; S: sample solution; S1: primary test liquid

### Description of Embodiments

The technical solutions in the embodiments of the present application will be clearly and completely described below in conjunction with the drawings in the embodiments of the present application. Obviously, the described embodiments are only a part of the embodiments of the present application, rather than all the embodiments. Based on the embodiments in this application, all other embodiments obtained by those of ordinary skill in the art without creative work shall fall within the protection scope of this application. The same reference numerals in the drawings represent the same or similar components. On the other hand, well-known components and steps are not described in the embodiments, so as to avoid unnecessary restrictions on the application.

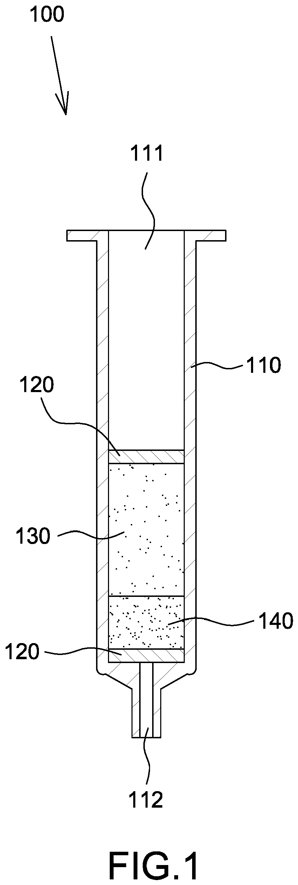

Referring to FIG. 1, there is shown an extraction kit 100 of the present application for extracting drug residues from livestock or poultry aquatic products. The extraction kit 100 for extracting drug residues from livestock or poultry aquatic products of the present application includes a pipe 110, a first powder mixture layer 130 filled in the pipe 110 and a second powder mixture layer 140 filled in the pipe 110. The pipe 110 is preferably a cylindrical pipe having an output port 112 at the bottom thereof and an input port 111 at the top thereof. The first powder mixture layer 130 is located below the input port 111, and the second powder mixture layer 140 is located below the first powder mixture layer 130 and above the output port 112. Besides, the extraction kit 100 of the present application further includes two filter pads 120, wherein one of the filter pads 120 is fixed on the top surface of the first powder mixture layer 130 and the other filter pad 120 is fixed on the bottom surface of the second powder mixture layer 140. The top surface of the second powder mixture layer 140 is in direct contact with the first powder mixture layer 130. Alternatively, a filter pad (not shown in the figure) may be further inserted between the first powder mixture layer 130 and the second powder mixture layer 140 to prevent them from mixing.

The extraction kit 100 mentioned above is used in a procedure of detecting drug residues in livestock or poultry aquatic products. This procedure includes the method of obtaining a primary test liquid from a livestock or poultry aquatic sample using the extraction kit 100 of the present application. The method includes the following steps. The livestock or poultry aquatic sample is first homogenized by using a homogenizer so that the sample is processed into fragments of the livestock or poultry aquatic sample. The livestock or poultry aquatic samples are taken from cattle, pigs, chickens, fish, shrimps, eggs, cattle and goat milk and other livestock or poultry aquatic samples, such as viscera, for use as detecting samples of drug residue detection.

Afterward, an extraction solvent is added to the above livestock or poultry aquatic sample and shaken strongly to obtain a sample solution S. A 2~(5±0.03) grams of the livestock or poultry aquatic sample needs to be added 1 to 10mL of extraction solvent. The extraction solvent is selected from acid-containing acetonitrile methanol, 0.05 mol/L hydrochloric acid, 0.1 mol/L EDTA-2Na or acid-containing acetonitrile solution. A 2~(5±0.03) grams of the livestock or poultry aquatic sample is preferably added with 5 mL of the aforementioned extraction solvent. The extraction solvent is preferably an acetonitrile solution containing 1% acetic acid.

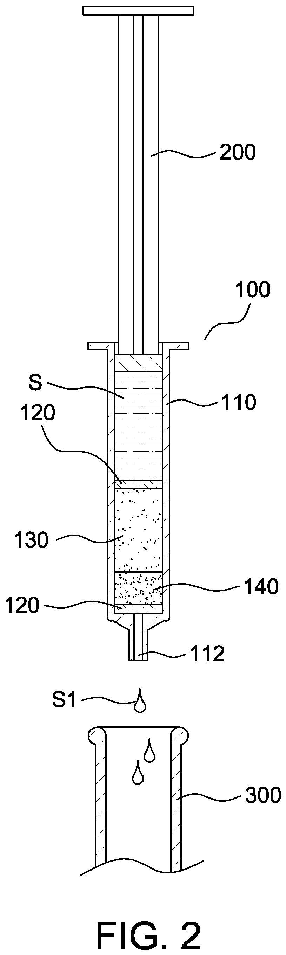

The sample solution S is then added into the pipe 110 of the extraction kit 100, as shown in FIG. 2.

Finally, the sample solution S in the pipe 110 is driven to flow through the first powder mixture layer 130 and the second powder mixture layer 140 in sequence so as to output a primary test liquid from the output port 112 of the pipe 110. One of the ways of driving the sample solution S to flow through the first powder mixture layer 130 and the second powder mixture layer 140 in sequence is to press a piston rod 200 to drive the sample solution S to flow. In addition, an air exhausting method may also be used to drive the sample solution S in the pipe 110 to flow through the first powder mixture layer 130 and the second powder mixture layer 140 in sequence. In the air exhausting method a suction device including a vacuum pump (not shown in the figures) is used to connect the output port 112. The vacuum pump is then powered to suck the sample solution S in the pipe 110 to flow out of the output port 112. A flow rate of the sample solution S is preferably controlled to a range of 0.01 to 0.2 mL/sec, more preferably to 0.05 mL/sec. It is to be noted that the filter pads 120 mentioned above should be one without affecting the aforementioned flow rate.

The powder mixture in the first powder mixture layer 130 is able to adsorb most of the water in the sample solution S. Therefore, most of the water in the sample solution S is kept in the first powder mixture layer 130 after the sample solution S flows through the first powder mixture layer 130. Furthermore, the powder mixture in the second powder mixture layer 140 is able to adsorb the remaining water in the sample solution S and the impurities, such as oil or pigment, which may interfere with the instruments when the sample solution S flows through the second powder mixture layer 140. Therefore, after the sample solution S flows through the second powder mixture layer 140, it will form a primary test liquid S1 without impurities or with few impurities. The primary test liquid S1 may be collected with a tube 300.

The primary test liquid S1 may be directly detected by a liquid chromatograph tandem mass spectrometer (LC/MS/MS) to ensure that the drug residues in the sample comply with a requirement. Alternatively, the primary test liquid S1 may also be subjected to a step of air-drying, a step of adding acetonitrile water and a step of filtering with a filter in sequence and then be detected by a liquid chromatography tandem mass spectrometer (LC/MS/MS).

The total weight of the first powder mixture layer 130 is 0.4 to 8 grams, preferably 4.5 grams. The pipe 110 has a selected inner diameter so that the first powder mixture layer 130 has not been pressed tightly and is loose or fluffy during a process of being filled in the pipe 110 with the selected inner diameter. From the viewpoint of volume, the first powder mixture layer 130 has an area of 0.6 to 7.1 cm² in the pipe 110, preferably 1.13 cm², and a height of 1 to 8 cm, preferably 4.61 cm. Therefore, the total volume of the first powder mixture layer 130 is preferably 5.8 cm³ and the density of the first powder mixture layer 130 is preferably 0.86 g/ cm³. Further, the first powder mixture layer 130 has a porosity of 35 to 70% in the pipe 110, preferably 50% to 62%, so that the flow rate of the sample solution S flowing through the first powder mixture layer 130 may be controlled in an expected range. This makes most of the water in the sample solution S removed by the first powder mixture layer 130.

The above porosity is defined as (the total volume of the first powder mixture layer 130 filled in the pipe 110-the real volume of the first powder mixture layer 130)/(the total volume of the first powder mixture layer 130 filled in the pipe 110)×100%. In the present application, the powder component used in the first powder mixture layer 130 includes anhydrous sodium sulfate (Na2SO4) and sodium chloride (NaCl). The anhydrous sodium sulfate and sodium chloride are uniformly mixed in the first powder mixture layer 130. Further, the first powder mixture layer 130 is preferably a mixture of anhydrous sodium sulfate powder and sodium chloride powder, and the weight ratio of the anhydrous sodium sulfate to the sodium chloride in the first powder mixture layer 130 is (3∼5):1, preferably 3.5:1.

In the present application, the second powder mixture layer 140 has a weight of 0.2 to 3.6 grams, preferably 2.1 grams. From the viewpoint of volume, the second powder mixture layer 140 has an area of 0.6 to 7.1 cm² in the pipe 110, preferably 1.13 cm², and a height of 0.23 to 5 cm, preferably 2.0 cm.

In the present application, the powder component used in the second powder mixture layer 140 includes Octadecylsilane (C18) powder and anhydrous sodium sulfate powder. The C18 and anhydrous sodium sulfate are uniformly mixed in the second powder mixture layer 140. Further, the second powder mixture layer 140 is preferably a mixture of C18 powder and anhydrous sodium sulfate powder, and the weight ratio of the anhydrous sodium sulfate to the C18 in the second powder mixture layer 140 is (1.5∼3):1, preferably 2:1.

It is apparent from the above description that the sample solution S composed of the sample fragments and the extraction solvent may be directly extracted by using the extraction kit 100 of the present application to obtain a primary test liquid. With the use of the extraction kit 100 of the present application, the time taken to obtain a primary test liquid from a livestock or poultry aquatic product may be greatly reduced. Therefore, the detection of drug residues in the sample may be performed quickly. For example, when the extraction kit of the present application is used to obtain primary test liquid from 20 samples, the consumption of the extraction solvent may be saved by 35-90%, and the operation time for extraction may be saved by 80-95%. Furthermore, according to the extraction kit of the present application and the method of obtaining the primary test liquid, 7 to 10 types of animal drug residues in food, including sulfonamides, quinolones, ionic anticoccidial drugs, antiprotozoal agents, tetracyclines, receptors, and cephalosporins may be simultaneously detected. In comparison with the current government announcement method, detection of different types of drug residues needs different detection methods.

Finally, it should be noted that the above embodiments are only used to illustrate the technical solutions of the application, not to limit them; although the application has been described in detail with reference to the foregoing embodiments. It should be noted and understood that there can be improvements and modifications made of the present invention described in detail above without departing from the scope of the invention as set forth in the accompanying claims.

## Claims

1. A kit (100) for extracting drug residues from livestock or poultry aquatic products, comprising:
a pipe (110) having an output port (112) at a bottom thereof and an input port (111) at a top thereof, the input port is configured to input a sample solution (S);
**characterized by** a first powder mixture layer (130) filled in the pipe, the first powder mixture layer including a mixture of anhydrous sodium sulfate powder and sodium chloride powder; and
a second powder mixture layer (140) filled in the pipe and positioned between the first powder mixture layer and the output port, the second powder mixture layer including a mixture of C18 powder and anhydrous sodium sulfate powder.

2. The kit as claimed in claim 1, wherein a weight ratio of the anhydrous sodium sulfate to the sodium chloride in the first powder mixture layer is (3~5):1.

3. The kit as claimed in claim 1, wherein a weight ratio of the anhydrous sodium sulfate to the C18 in the second powder mixture layer is (1.5-3):1.

4. The kit as claimed in claim 2, wherein the weight ratio of the anhydrous sodium sulfate to the sodium chloride in the first powder mixture layer is 3.5:1.

5. The kit as claimed in claim 3, wherein the weight ratio of the anhydrous sodium sulfate to the C18 in the second powder mixture layer is 2:1.

6. The kit as claimed in claim 1, wherein the first powder mixture layer has a porosity of 35 to 70% in the pipe.

7. The kit as claimed in claim 1, wherein the first powder mixture layer has an area of 0.6 to 7.1 cm² and a height of 1 to 8 cm in the pipe, the second powder mixture layer has an area of 0.6 to 7.1 cm² and a height of 0.23 to 5 cm in the pipe.

8. A method of obtaining a primary test liquid from a livestock or poultry aquatic sample, comprising:
homogenizing the livestock or poultry aquatic sample so as to obtain fragments of the livestock or poultry aquatic sample;
adding an extraction solvent to the fragments of the livestock or poultry aquatic sample and then shaking to obtain a sample solution (S),
wherein a 2~(5±0.03) grams of the livestock or poultry aquatic sample is added 1 to 10 mL of the extraction solvent;
adding the sample solution into the pipe (110) of the kit (100) of any one of claims 1-7; and
driving the sample solution in the pipe to flow through the first powder mixture layer (130) and the second powder mixture layer (140) in the pipe in sequence to output from the output port of the pipe a primary test liquid (S1).

9. The method as claimed in claim 8, wherein the extraction solvent is one selected from the group consisting of acid-containing acetonitrile methanol, hydrochloric acid, EDTA-2Na and acid-containing acetonitrile solution.

10. The method as claimed in claim 8, wherein a flow rate of the sample solution is controlled in a range of about 0.01 to 0.2 mL/sec.

## Patentansprüche

1. Set (100) zum Extrahieren von Arzneimittelrückständen aus aquatischen Produkten von Vieh oder Geflügel, umfassend:
ein Rohr (110) mit einer Ausgangsöffnung (112) an seinem Boden und einer Eingangsöffnung (111) an seinem oberen Ende, wobei die Eingangsöffnung so konfiguriert ist, dass sie eine Probenlösung (S) einführt;
**gekennzeichnet durch** eine erste Pulvermischungsschicht (130), die in das Rohr gefüllt ist, wobei die erste Pulvermischungsschicht eine Mischung aus wasserfreiem Natriumsulfatpulver und Natriumchloridpulver enthält; und
eine zweite Pulvermischungsschicht (140), die in das Rohr gefüllt ist und zwischen der ersten Pulvermischungsschicht und der Ausgangsöffnung angeordnet ist, wobei die zweite Pulvermischungsschicht eine Mischung aus C18-Pulver und wasserfreiem Natriumsulfatpulver enthält.

2. Set nach Anspruch 1, wobei das Gewichtsverhältnis des wasserfreien Natriumsulfats zum Natriumchlorid in der ersten Pulvermischungsschicht (3 bis 5) : 1 beträgt.

3. Set nach Anspruch 1, wobei das Gewichtsverhältnis des wasserfreien Natriumsulfats zum C18 in der zweiten Pulvermischungsschicht (1,5 bis 3) : 1 beträgt.

4. Set nach Anspruch 2, wobei das Gewichtsverhältnis des wasserfreien Natriumsulfats zu dem Natriumchlorid in der ersten Pulvermischungsschicht 3,5:1 beträgt.

5. Set nach Anspruch 3, wobei das Gewichtsverhältnis des wasserfreien Natriumsulfats zu dem C18 in der zweiten Pulvermischungsschicht 2:1 beträgt.

6. Set nach Anspruch 1, wobei die erste Pulvermischungsschicht eine Porosität von 35 bis 70% in dem Rohr aufweist.

7. Set nach Anspruch 1, wobei die erste Pulvermischungsschicht eine Fläche von 0,6 bis 7,1 cm² und eine Höhe von 1 bis 8 cm in dem Rohr hat, die zweite Pulvermischungsschicht eine Fläche von 0,6 bis 7,1 cm² und eine Höhe von 0,23 bis 5 cm in dem Rohr hat.

8. Verfahren zur Gewinnung einer primären Testflüssigkeit aus einer aquatischen Probe von Vieh oder Geflügel, umfassend:
Homogenisieren der aquatischen Probe von Vieh oder Geflügel, um Fragmente der aquatischen Probe von Vieh oder Geflügel zu erhalten;
Zugabe eines Extraktionslösungsmittels zu den Fragmenten der aquatischen Probe von Vieh oder Geflügel und anschließendes Schütteln, um eine Probenlösung (S) zu erhalten, wobei 2~(5±0,03) Gramm der aquatischen Probe von Vieh oder Geflügel mit 1 bis 10 mL des Extraktionslösungsmittels versetzt werden;
Hinzufügen der Probenlösung in das Rohr (110) des Sets (100) nach einem der Ansprüche 1-7; und
Antreiben der Probenlösung in dem Rohr, damit sie nacheinander durch die erste Pulvermischungsschicht (130) und die zweite Pulvermischungsschicht (140) in dem Rohr fließt, um aus der Ausgangsöffnung des Rohrs eine primäre Testflüssigkeit (S1) auszugeben.

9. Verfahren nach Anspruch 8, wobei das Extraktionslösungsmittel eines ist, das aus der Gruppe ausgewählt ist, die aus säurehaltigem Acetonitril, Methanol, Salzsäure, EDTA-2Na und säurehaltiger Acetonitril-Lösung besteht.

10. Verfahren nach Anspruch 8, wobei eine Durchflussrate der Probenlösung in einem Bereich von etwa 0,01 bis 0,2 mL/s gesteuert wird.

## Revendications

1. Kit (100) pour extraire des résidus médicamenteux de produits aquatiques de bétail ou de volaille, comprenant :
un tuyau (110) comportant un orifice de sortie (112) à un fond de celui-ci et un orifice d'entrée (111) à un sommet de celui-ci, l'orifice d'entrée est configuré pour entrer une solution d'échantillon (S) ;
**caractérisé par** une première couche de mélange de poudres (130) remplie dans le tuyau, la première couche de mélange de poudres incluant un mélange de poudre de sulfate de sodium anhydride et de poudre de chlorure de sodium ; et
une seconde couche de mélange de poudres (140) remplie dans le tuyau et positionnée entre la première couche de mélange de poudre et l'orifice de sortie, la seconde couche de mélange de poudres incluant un mélange de poudre C18 et de poudre de sulfate de sodium anhydride.

2. Kit selon la revendication 1, dans lequel un rapport en poids du sulfate de sodium anhydride sur le chlorure de sodium dans la première couche de mélange de poudres est (3~5):1.

3. Kit selon la revendication 1, dans lequel un rapport en poids du sulfate de sodium anhydride sur le C18 dans la seconde couche de mélange de poudres est (1,5~3):1.

4. Kit selon la revendication 2, dans lequel un rapport en poids du sulfate de sodium anhydride sur le chlorure de sodium dans la première couche de mélange de poudres est 3,5:1.

5. Kit selon la revendication 3, dans lequel un rapport en poids du sulfate de sodium anhydride sur le C18 dans la seconde couche de mélange de poudres est 2:1.

6. Kit selon la revendication 1, dans lequel la première couche de mélange de poudres présente une porosité de 35 à 70 % dans le tuyau.

7. Kit selon la revendication 1, dans lequel la première couche de mélange de poudres présente une aire de 0,6 à 7,1 cm² et une hauteur de 1 à 8 cm dans le tuyau, la seconde couche de mélange de poudres présente une aire de 0,6 à 7,1 cm² et une hauteur de 0,23 à 5 cm dans le tuyau.

8. Procédé d'obtention d'un liquide de test primaire à partir d'un échantillon aquatique de bétail ou de volaille, comprenant :
l'homogénéisation de l'échantillon aquatique de bétail ou de volaille de manière à obtenir des fragments de l'échantillon aquatique de bétail ou de volaille ;
l'ajout d'un solvant d'extraction en fragments de l'échantillon aquatique de bétail ou de volaille puis l'agitation pour obtenir une solution d'échantillons (S),
dans lequel 2~(5±0,03) grammes de l'échantillon aquatique de bétail ou de volaille est ajouté à 1 à 10 ml du solvant d'extraction ;
l'ajout de la solution d'échantillon dans le tuyau (110) du kit (100) selon l'une quelconque des revendications 1-7 ; et
l'entraînement de la solution d'échantillon dans le tuyau pour qu'elle s'écoule à travers la première couche de mélange de poudres (130) et la seconde couche de mélange de poudres (140) dans le tuyau dans l'ordre pour délivrer, depuis le port de sortie du tuyau, un liquide de test primaire (S1).

9. Procédé selon la revendication 8, dans lequel le solvant d'extraction est l'un sélectionné dans le groupe se composant d'acétonitrile méthanol contenant un acide, d'acide chlorhydrique, EDTA-2Na et d'une solution d'acétonitrile contenant un acide.

10. Procédé selon la revendication 8, dans lequel un débit de la solution d'échantillon est régulé dans une plage d'environ 0,01 à 0,2 mils.
